Europäisches Patentamt

European Patent Office

Office européen des brevets

(19)

(11) Publication number: **0 254 758 B1**

# EUROPEAN PATENT SPECIFICATION

(45) Date of publication of patent specification: **26.06.91**

(21) Application number: **86110455.2**

(22) Date of filing: **29.07.86**

(51) Int. Cl.⁵: **B01D 71/02**, B01D 71/24, B01D 61/36, C07C 29/76, C02F 1/00

(54) Pervaporation process and membrane.

(43) Date of publication of application:
**03.02.88 Bulletin 88/05**

(45) Publication of the grant of the patent:
**26.06.91 Bulletin 91/26**

(84) Designated Contracting States:
**AT BE CH DE FR GB IT LI LU NL SE**

(56) References cited:
**EP-A- 0 135 069**
**EP-A- 0 154 248**
**FR-A- 2 079 460**
**FR-A- 2 281 322**
**US-A- 2 924 630**

**JOURNAL OF MEMBRANE SCIENCE, vol. 16, no. 1/3, December 1983, pages 269-284, Elsevier Science Publishers B.V., Amsterdam, NL; M.H.V.MULDER et al.: "Ethanol-water separation by pervaporation"**

(72) Inventor: **te Hennepe, Hendrikus J.C.**
**Calslaan 11-308**
**NL-7522 MH Enschede(NL)**
Inventor: **Mulder, Marcellinus H.V.**
**Spielehorst 11**
**NL-7531 ER Enschede(NL)**
Inventor: **Smolders, Cornelis A.**
**D. Nijhoffstraat 15**
**NL-7552 GP Hengelo(NL)**
Inventor: **Bargeman, Derk**
**Reviusstraat 113**
**NL-7552 GH Hengelo(NL)**
Inventor: **Schröder, George A.T.**
**Narcisstraat 14**
**NL-2252 XE Voorschoten(NL)**

(73) Proprietor: **GFT Gesellschaft für Trenntechnik mbH**
**Gerberstrasse 48**
**W-6650 Homburg/Saar(DE)**

(74) Representative: **Geissler, Bernhard, Dr.**
**Patent- und Rechtsanwälte et al**
**Bardehle-Pagenberg-Dost- Altenburg-Frohwitter & Partner Postfach 86 06 20**
**W-8000 München 86(DE)**

## Description

This invention relates to pervaporation processes. In accordance with another aspect, this invention relates to membranes useful in such pervaporation processes.

Pervaporation is a separation process where a liquid feed mixture to be separated is brought in contact with a first or feed side of a suitable membrane. If at the second or permeate side of the membrane the partial vapour pressures of the components of the liquid feed mixture are kept below the partial vapour pressures of the components at the feed side, a driving force for the migration of these components through the membrane is established. According to their respective permeabilities the components will pass through the membranes at different rates, whereby permeation rates or permeabilities are complex functions of a number of different parameters, such as nature and concentration of the permeating species, nature and structure of the membrane, composition of the mixture, temperature, and others. As the partial vapour pressures are lower at the permeate side than at the feed side of the membrane, the components will evaporate after passing through the membrane, forming a vaporous permeate. The process is therefore called "pervaporation". Due to the different permeabilities of the components the composition of the permeate will differ from the composition of the composition of the feed mixture, and a separation of the feed mixture is observed.

Provided a sufficiently high difference in partial vapour pressures is maintained between feed and permeate side the separation capacity of a given membrane toward a given feed mixture is determined only by the permeabilities of the respective components. Only non-porous membranes can be used for pervaporation and it is believed that solubility of a component in the membrane material together with diffusivities are governing the mass transport across the membrane. Pervaporation is a non-equilibrium dynamic process, where transport phenomena determine separation efficiency.

The membrane process of pervaporation is generally known and has been described in the literature; see, for instance, M. H. V. Mulder et al., J. Membr. Sci. 16 (1983) 269 or G. F. Tusel et al., Desalination 53 - (1985) 327. Further pervaporation membranes are described by J. Neel et al., Desalination 53 (1985) 297 and J.-P. Brun et al., J. Membr. Sci. 25 (1985) 55.

Other prior art that should be mentioned is: D. R. Paul et al., J. Pol. Sci. Symp. No. 41 (1973) 79, who discloses zeolite in conjunction with a polymer. FR-A-2 079 460 describes a membrane comprising a silicone rubber film containing zeolite, which membrane is used for enriching the oxygen content in air.

It is an object of this invention to provide a pervaporation process with excellent separation efficiency. A further object of this invention is to provide a new membrane useful in a pervaporation process exhibiting good separation efficiency for various separation tasks. More specifically, it is an object of this invention to provide a continuous pervaporation process, in which the feed material is passed continuously through an inlet chamber which is closed by a semi-permeable membrane and in which the permeate is continuously withdrawn from a permeate chamber located at the other side of this membrane with improved efficiency over known processes. Yet more specifically it is an object of this invention to provide a pervaporation process for industrial processes, and in particular for processes in which the removal of low concentrations of impurities, particularly organic impurities from water constitutes a significant task.

Accordingly, the invention relates to the membrane defined in claim 1 and the use thereof in a pervaporation process as defined in claim 11.

The polymer matrix and film, respectively employed in the membrane of this invention is made from an elastomeric polymer. The term "elastomeric" refers to the property of the polymer that it can be stretched a significant amount and after a release of the stretching force returned substantially to its original shape.

A preferred group of elastomeric polymers useful in accordance with this invention as the polymer matrix are the silicone rubbers, preferably polysiloxane rubbers, in particular polydimethylsiloxane rubber, the nitrilebutadiene rubbers (NBR), polyisobutylene, polyisoprene and styrenebutadiene copolymer rubbers.

The elastomeric polymers useful for the membrane of this invention preferably are those which already exhibit a certain separation efficiency as a membrane even without the zeolite incorporation therein. These preferred polymers can be broadly described as hydrophobic. The yet more preferred and more specific polymers useful in accordance with this invention are silicone rubber polymers, and in particular polyhydrocarbyl siloxane. Yet more specifically and preferably the elastomeric polymer employed in accordance with this invention is a polyhydrocarbyl siloxane having hydrocarbyl substituents with 1 to 10 carbon atoms, preferably aryl or alkyl substituents, wherein these substituents may carry one or more flourine substituents; most preferably, these fluorine substituents when present are remote from the silicone atom, i.e., are not on the carbon atom attached to the silicone atom.

For some of the processes herein described the polydimethylsiloxane is particularly useful and thus preferred as the elastomeric polymer matrix in the membrane of this invention.

In broad terms, the elastomeric polymer used in the membrane of this invention can be characterized by a molecular weight in the range of 50 thousand to 10 million.

The polymers used in this invention have been described above as preferably being hydrophobic. In other words, the polymers show selectivity toward organic molecules over water. These preferred polymers thus allow molecules of significantly lower polarity than others to pass, while they reject molecules of higher polarity, e.g., water.

The zeolites used in accordance with the invention have a high Si/Al ratio, more particularly have an Si/Al ratio of 12 or more and an $SiO_2/Al_2O_3$ ratio of 35 or more. These ratios can be determined by known processes, such as atomic absorption spectroscopy (AAS), X-ray spectroscopy and classical techniques, such as volumetric and titration methods.

The zeolites embedded in the membrane of this invention preferably are as hydrophobic as possible. These zeolites can also be described as selectively sorbing organic molecules.

The incorporation of the preferred hydrophobic zeolites in the elastomeric polymer membrane has been found to improve the performance of this membrane in such processes as the pervaporation process.

Some properties of crystalline aluminosilicates or zeolites are described in U.S. patent 3,732,326 and European patent 31 676. Zeolites with a high Si/Al ratio exhibit hydrophobic behavior in that they sorb the less polar component from a mixture of said components with a more polar component. These zeolites are therefore preferred.

The zeolites are finely divided materials when incorporated in the elastomeric polymer matrix. Generally the particle size of the zeolite incorporated will be less than and preferably significantly less than the thickness of the membrane. The particle size of the zeolite is preferably 0.1 to 10 microns. One particularly advantageous zeolite material involves a mixture of two fractions, one having a particle size in the average of one micrometer and the larger fraction having a particle size average of about five micrometers. The particle size is determined by B.E.T. methods or X-ray diffraction.

Zeolites of this type can be produced in different ways. In general, zeolites can be treated to remove alumina from the framework so that the $SiO_2/Al_2O_3$ ratio is at least 35. On the other hand, zeolites can be synthesized in a form wherein said ratio is already at least 35. Such zeolites are especially useful for the present invention because they can be used without further treatment. One preferred such zeolite is silicalite, the preparation of which is disclosed in U.S. patent 4,061,724. Other zeolites ZSM-5, ZSM-11 and silicalite-2 are disclosed in U.S. patent 3,702,886, U.S. patent 3,709,979 and described by D.M. Bibby et al., Nature 280 (1979) 664, respectively.

Many zeolites of this nature are commercially available.

The preferred zeolites employed in accordance with this invention can also be characterized by their ethanol adsorption capacity. Preferably this ethanol adsorption capacity is in the range of 0.02 to 0.4 g/g, most preferably in the range of 0.04 to 0.20 g/g. The adsorption capacity values are measured using adsorption isotherms.

The membranes of this invention preferably consist essentially of the elastomeric polymer and the zeolite. Usual additives, such as stabilizers, etc., are contained in the polymer.

The zeolite particles embedded in the polymer matrix film of this invention are present in a quantity determined by stability considerations with respect to such film. Preferably the film or membrane contains 10 to 80, most preferably 60 to 75, weight percent zeolite based on the total weight of the membrane including the zeolite particles.

The thickness of the membrane typically is 1 to 200 micrometers, preferably about 5 to 20 micrometers.

The heterogenous membrane in accordance with this invention may be shaped in various ways and may be self-supporting or supported. In a self-supporting embodiment the membrane can preferably be formed as a hollow fiber. In accordance with this invention it is presently preferred that the membrane is supported. The membranes of this invention are selective toward molecules of low polarity in a mixture with a material of high polarity. The membranes exhibit both high flux and high selectivity. Therefore the resulting heterogenous membrane can be used in various membrane pervaporation separation processes. The membranes can be used in particular for a continuous process, although they are useful also in batchlike operations when desired. In accordance with another embodiment of this invention a pervaporation process is provided. This pervaporation process is characterized by the fact that a membrane in accordance with this invention is used in the separation. The pervaporation separation process of this invention can be broadly described as one in which a feed material containing at least two components having different permeability with respect to a membrane is passed to an inlet chamber and into contact with said membrane. Due to the different permeabilities the product passing through the membrane is enriched in the component having the higher permeability. The product at the permeate side of the membrane is withdrawn in the form of a vapor. The latter can be accomplished preferably by providing a condensor remote from the membrane so that the vapor leaving the membrane on the permeate side condenses in this condensor. Thus, in yet other terms, the preferred process of this invention involves providing the feed material with the two components of different permeability on one side of the membrane and providing a permeate chamber on the other side of the membrane, with the proviso that the temperature of the permeate chamber is substantially below the temperature of the feed liquid on the other side of the membrane. The most advantageous process involves continuously passing the feed material through the feed chamber which is closed by the membrane, and the continuous withdrawal of the cold vapor from the permeate chamber. In accordance with this invention the membranes as defined above are used as the active separation element.

The process can be carried out under various pressures. For certain applications it may be desirable to utilize substantially atmospheric pressure at the feed chamber, and in other cases a reduced pressure, even vacuum, may be applied, to the permeate chamber. The actually employed temperatures and pressures depend upon the material to be separated, specifically upon the individual boiling points of the two components in the preferred process. The permeate vapor is condensed after it has been withdrawn from the permeate chamber and subjected to further treatment.

The most preferred way of carrying out the process of this invention is in a multi-step of continuous operation in which the individual materials are passed through a series of pervaporation cells of which at least one contains the membrane of this invention as the active material, thus achieving a fractionation through such a series of pervaporation cells. The number of such cells in a multi-step operation is preferably 2 to 10.

The material depleted of the desired component may be recycled, e.g., to an initial separation column in which a predestination of the material is carried out from which the feed material is withdrawn. For instance, this feed material could be an azeotrope of the two components which are withdrawn from the initial distillation column.

A preferred field of application of the membrane according to the invention and a preferred process of this invention is the continuous separation of small organic molecules of low polarity from dilute aqueous solutions. Such organic molecules are in particular hydrocarbons, substituted hydrocarbons, in particular chlorinated hydrocarbons and alcohols having from 1 to 10 carbon atoms, in particular from 1 to 5 carbon atoms in the alcohol molecule, such as methanol, ethanol, propanol, isopropanol, butanol and the like, and organic compounds with comparable polarity. The membrane and process of this invention thus are particularly advantageously suited for the continous removal of impurities, such as alcohols, from industrial or municipal waste waters. Another example for the application of this invention is the removal of trace impurities from ground water. Still another case of application of the invention is the recovery of fermentation alcohol from the fermentation broth in a continuous membrane process.

In the preferred process of this invention the concentration of the impurities to be at least partially removed by the process of this invention range from 1 ppm to the solubility limits; typically these concentrations are in the range of 5 ppm to 5 percent. For special purification purposes the impurities of the feed stuffs used will be in the range of 20 to 10,000 ppm.

The process of this invention is particularly suitable for the separation of hydrocarbons and chlorinated hydrocarbons, alcohols, esters, ethers, and amines from aqueous solutions containing these impurities. The mentioned impurities typically have 1 to 12 carbon atoms. In the case of chlorinated hydrocarbons they will be present in a concentration of 5 mg organic chlorine per liter or less.

If this invention is used in conjunction with separating alcohols from aqueous solutions containing such alcohols the concentrations of the alcohol will generally be less than 20 weight percent, and preferably less than 15 weight percent.

Further features and advantages will be apparent from the following example in connection with the drawing. These examples serve to illustrate the invention without limiting the same.

Figure I shows a schematic drawing of the pervaporation test apparatus. Said apparatus comprises a membrane I supported by supporting means 2 and supplied with a feed solution 3. In the case of examples I to 6 described hereinafter, said feed solution is a dilute aqueous solution of an alcohol --namely methanol, ethanol, propanol, isopropanol or butanol-- from which the alcohol admixture has to be separated by a membrane pervaporation process. The amount of said alcohol (i.e., the small organic molecule compound) being transported through the membrane is vacuum frozen by means of a cooling trap 4 (i.e., a Dewar flask cooled with liquid nitrogen).

Example I

This example illustrates the preparation of polymer membranes, without zeolite added, and their pervaporation performance.

Silicone rubber compounds RTV 615A and 615B from General Electric were mixed in a 10:1 ratio according to the procedure described by General Electric. The rubber is polydimethylsiloxane. The mixture was transferred past a doctor's knife and cast on a perspex plate, casting thickness 150 $\mu$m. In accordance with the procedure given by General Electric the perspex plate with the rubber film was put in an oven and the film was cured at 80 °C for four hours to assure complete crosslinking of the film.

After completion of the crosslinking, the silicone rubber film or membrane was removed from the perspex plate. The thickness of the film was measured with help of a micrometer. Part of the membrane was put to the test on the pervaporation apparatus (see Figure I). The feed solution was a mixture of water and alcohol, the alcohol concentration 5.3 + 0.2 % by weight. The feed temperature was maintained at 22.5 °C. The flux was determined by weighing of the collected permeate. All fluxes were normalized to 100 $\mu$m membrane thickness. The permeation selectivity was computed as

$$\alpha = \frac{x_{alc}^{perm}}{x_{alc}^{feed}} \cdot \frac{(1-x_{alc}^{feed})}{(1-x_{alc}^{perm})}$$

with x = weight fraction, the superscripts **feed** and **perm** are for feed solution and permeate respectively. The subscript **alc** stands for alcohol.

Tested were the alcohols methanol, ethanol, propanol and isopropanol. The results are listed in Table I.

---

Table 1: Pervaporation results for silicone membranes; alcohol concentration of the feed 5.3 ± 0.2 % by weight

---

| alcohol | flux (1/m²h) | $\alpha$ (-) |
|---|---|---|
| methanol | $2.0 \times 10^{-2}$ | 7.6 |
| ethanol | $2.4 \times 10^{-2}$ | 7.6 |
| propanol | $2.8 \times 10^{-2}$ | 19.1 |
| isopropanol | $2.7 \times 10^{-2}$ | 9.5 |

FIGURE 1

## Example 2

This example shows the preparation of a zeolite-filled silicone rubber membrane.

Zeolite was prepared according to the original patent U.S. Pat. 4,061,724. The particle size was determined through scanning electron microscopy and was found to be between 0.5 and 10 $\mu$m. To avoid the unwanted presence of larger particles the zeolite was sieved on a test sieve with a 40 $\mu$m aperture before further use. A silicone rubber mixture was prepared as in example I. An amount of 10 g of the prepared silicalite was mixed in a 25 ml jar with 4.4 g of the silicone rubber mixture. The resulting paste was transferred past a doctor's knife and cast on a perspex plate, casting thickness 150 $\mu$m. The zeolite-containing film, zeolite content 69.4 % by weight, was cured as in example I. The membrane thickness was measured as in example I.

## Example 3

This example illustrates the dependence of membrane performance for a zeolite-filled membrane on the sorption capacity of the silicalite used.

Several batches of zeolite were prepared according to the original patent U.S. Patent 4,061,724, in batches of about 30 g. The different batches were characterized through ethanol adsorption at room temperature and surface area measurement (B.E.T. method). The ethanol adsorption was measured from the liquid phase through contacting about I g of zeolite with about 10 g of an ethanol/water mixture of about 10 % by weight ethanol. The composition of the liquid was determined before and after adsorption was completed. The amount of ethanol adsorbed per gram of zeolite was computed from these data as

$$M_{ads} = \frac{(X_{alc}^{before\ ads.} - X_{alc}^{after\ ads.}) \times M_{mix}}{M_{sil}} \quad (g/g)$$

with $M_{mix}$ the mass of the liquid in contact with the zeolite. $M_{sil}$ is the mass of the zeolite.

Due to scattering in the synthesis results some batches with different $M_{ads}$ were obtained. To obtain pervaporation data for each batch of zeolite, membranes were made from the different batches according to the method in example 2 but with a 60 % by weight filling. The membranes were tested as in example I, the alcohol being ethanol. In table 2 the sorption and pervaporation data are listed for three different zeolite batches.

Table 2: Adsorption and pervaporation data; alcohol (ethanol) concentration of the feed 5.3 ± 0.2 % by weight

| silicalite | surface area (m²/g) | $M_{ads}$ (g/g) | flux (l/m²h) | α (-) |
|---|---|---|---|---|
| A | 150 | 0.04 | $1.8 * 10^{-2}$ | 8.4 |
| B | 300 | 0.10 | $5.5 * 10^{-2}$ | 17 |
| C | 394 | 0.13 | $2.7 * 10^{-2}$ | 24 |

Example 4

This example illustrates the influence of the zeolite content on membrane performance for various alcohols.

Zeolite was prepared according to the original patent U.S. Pat. 4,06I,724. The zeolite was characterized by ethanol adsorption as in example 3. Batches with an adsorption capacity of 0.I0 + 0.0I g/g were selected. As in example 2 membranes were made but with different zeolite content. Said membranes were tested as in example I to obtain pervaporation data. The data is collected in Table 3.

Table 3: Pervaporation data for membranes with different zeolite content; alcohol concentration of the feed 5.3 ± 0.2 % by weight

| alcohol | silicalite (% by weight) | flux (1/m²h) | α (-) |
|---|---|---|---|
| methanol | 30 | $3.5 \times 10^{-2}$ | 9.5 |
| | 60 | $7.8 \times 10^{-2}$ | 13.0 |
| ethanol | 20 | $2.9 \times 10^{-2}$ | 10.3 |
| | 40 | $3.6 \times 10^{-2}$ | 14.9 |
| | 60 | $5.5 \times 10^{-2}$ | 17.2 |
| propanol | 30 | $2.9 \times 10^{-2}$ | 21.2 |
| | 45 | $3.1 \times 10^{-2}$ | 25.4 |
| | 60 | $3.1 \times 10^{-2}$ | 38.3 |
| | 70 | $3.5 \times 10^{-2}$ | 49.3 |
| isopropanol | 30 | $2.9 \times 10^{-2}$ | 11.9 |
| | 45 | $3.2 \times 10^{-2}$ | 13.7 |
| | 60 | $3.8 \times 10^{-2}$ | 23.0 |

Example 5

This example gives the flux and selectivity of a zeolite-filled silicone rubber membrane for butanol.

Zeolite was made according to the original patent U.S. Pat. 4,061,724. The zeolite was characterized through ethanol adsorption as in example 3, the sorption capacity being 0.l0 + 0.0l g/g. As in example 2 a membrane was made but with a filling of 70 % by weight. The membrane performance was tested as in example l but the alcohol used was butanol. The feed solution contained 2.87 % by weight butanol and the temperature of the feed was 2l °C.

The pervaporation result for butanol was:

| flux | $2.75 * 10^{-2}$ (1/m²h) |
|---|---|
| α | 135 (-) |

Example 6

This example illustrates the influence of temperature on pervaporation performance for various alcohols.

Zeolite was prepared according to the original patent U.S. Pat. 4,06l,724. The adsorption capacity for ethanol was measured as in example 3. Batches with a sorption capacity of 0.l0 + 0.0l g/g were selected and membranes were made as in example 2 but with 60 % by weight zeolite content. The membranes were tested as in example l but the temperature of the feed was raised to 35 °C for methanol. For ethanol and propanol the temperature was raised to 35 °C and to 50 °C.

The results are listed in Table 4 together with reference data for T = 22.5 °C from Table 3.

Table 4: Influence of temperature on pervaporation performance alcohol concentration of the feed 5.3 ± 0.2 % by weight

| alcohol | T (°C) | flux (l/m²h) | α (-) |
|---|---|---|---|
| methanol | 22.5 | $7.8 * 10^{-2}$ | 13.0 |
| | 35.0 | $15.5 * 10^{-2}$ | 9.5 |
| ethanol | 22.5 | $5.5 * 10^{-2}$ | 17.2 |
| | 35.0 | $14.0 * 10^{-2}$ | 14.0 |
| | 50.0 | $18.2 * 10^{-2}$ | 12.1 |
| propanol | 22.5 | $3.1 * 10^{-2}$ | 38.3 |
| | 35.0 | $7.1 * 10^{-2}$ | 38.8 |
| | 50.0 | $18.1 * 10^{-2}$ | 35.5 |

In the above examples I to 6 the zeolite has been diffracted. It has been determined that the structure corresponds to that of silicalite.

## Claims

1. A membrane for the separation of small organic molecules from aqueous solutions a fluid containing same comprising zeolite embedded into a matrix made from an elastomeric polymer, **characterized in that** the Si:Al atomic ratio of said zeolite is at least I2 or the $SiO_2:Al_2O_3$ ratio is at least 35.

2. The membrane of claim I characterized in that said zeolite has an ethanol absorption capacity in the range of 0.04 to 0.20 g/g.

3. The membrane of claim 1 or 2, characterized in that the content of said zeolite is in the range from I0 to 90 percent by weight.

4. The membrane of claim 3, characterized in that said content is in the range from 50 to 70 percent by weight.

5. The membrane of any of the preceding claims characterized in that said zeolite has a particle size of less than 40 micrometers.

6. The membrane of claim 5 characterized in that said particle size is in the range from 0.5 to l0 micrometers.

7. The membrane of any of the preceding claims characterized in that the membrane thickness is in the range from 10 to 200 micrometers.

8. The membrane of claim 7, characterized in that said thickness is in the range from 5 to 20 micrometers.

9. The membrane of any of the preceding claims characterized in that said polymer matrix is made of, silicone rubber, preferably a polysiloxane.

10. The membrane of claim 9 characterized in that said polysiloxane is polydimethylsiloxane.

11. Use of the membrane according to any of claims 1 to 10 in a membrane pervaporation process for the separation of small organic molecules from aqueous solutions containing same.

12. The use of claim 11, characterized in that said organic molecules are alcohols being dissolved in said water.

13. The use of claim 12 characterized in that said alcohols are methanol, ethanol, propanol, isopropanol or butanol.

14. The use of claim 13, characterized in that the concentration of said alcohols is in the range from 0.5 to 20 percent by weight.

15. The use of claim 14 characterized in that said concentration is in the range from 2 to 6 percent by weight.

**Revendications**

1. Membrane pour la séparation de petites molécules organiques à partir de solutions aqueuses les contenant, comprenant une zéolite incorporée dans une matrice réalisée en un polymère élastomère, caractérisée en ce que le rapport atomique Si : Al de la zéolite, est d'au moins 12, ou en ce que le rapport $SiO_2$ : $Al_2O_3$ est d'au moins 35.

2. Membrane selon la revendication 1, caractérisée en ce que la zéolite a une capacité d'adsorption d'éthanol, de 0,04 à 0,20 g/g.

3. Membrane selon la revendication 1 ou 2, caractérisée en ce que la teneur en la zéolite, est de 10 à 90 % en poids.

4. Membrane selon la revendication 3, caractérisée en ce que ladite teneur est de 50 à 70 en poids.

5. Membrane selon l'une quelconque des revendications précédentes, caractérisée en ce que la zéolite a une taille particulaire inférieure à 40 micromètres.

6. Membrane selon la revendication 5, caractérisée en ce que la taille particulaire est de 0,5 à 10 micromètres.

7. Membrane selon l'une quelconque des revendications précédentes, caractérisée en ce que l'épaisseur de la membrane, est de l à 200 micromètres.

8. Membrane selon la revendication 7, caractérisée en ce que l'épaisseur est de 5 à 20 micromètres.

9. Membrane selon l'une quelconque des revendications précédentes, caractérisée en ce que la matrice de polymère, est réalisée en un caoutchouc de silicone, de préférence un polysiloxane.

10. Membrane selon la revendication 9, caractérisée en ce que le polysiloxane, est le polydiméthylsiloxane.

11. Utilisation de la membrane selon l'une quelconque des revendications 1 à 10, pour mettre en oeuvre un procédé d'évaporation transmembranaire destiné à séparer les petites molécules organiques à partir de solutions aqueuses les contenant.

12. Utilisation selon la revendication 11, caractérisée en ce que les molécules organiques, sont des alcools dissous dans l'eau.

13. Utilisation selon la revendication 12, caractérisée en ce que les alcools comprennent le méthanol, l'éthanol, le propanol, l'isopropanol ou le butanol.

14. Utilisation selon la revendication 13, caractérisée en ce que la concentration en ces alcools, est de 0,5 à 20 % en poids.

15. Utilisation selon la revendication 14, caractérisée en ce que ladite concentration est de 2 à 6 % en poids.

## Ansprüche

1. Membran für die Abtrennung von kleinen organischen Molekülen aus diese enthaltenden wässrigen Lösungen, wobei die Membran Zeolith eingebettet in eine aus einem elastomeren Polymeren hergestellte Matrix enthält, **dadurch gekennzeichnet,** daß das Si:Al Atom-Verhältnis des Zeoliths mindestens 12, oder das $SiO_2:Al_2O_3$ Verhältnis mindestens 35 ist.

2. Membran nach Anspruch 1 dadurch gekennzeichnet, daß der Zeolith ein Ethanol-Absorptionsvermögen im Bereich von 0,01 - 0,20 g/g hat.

3. Membran nach Anspruch 1 oder 2, dadurch gekennzeichnet, daß der Gehalt an dem Zeolith im Bereich von 10 bis 90 Gewichts-Prozent liegt.

4. Membran nach Anspruch 3, dadurch gekennzeichnet, daß der Gehalt im Bereich von 50 bis 70 Gewichts-Prozent liegt.

5. Membran nach einem der vorhergehenden Ansprüche, dadurch gekennzeichnet, daß der Zeolith eine Partikel-Größe von weniger als 40 Micrometer hat.

6. Membran nach Anspruch 5, dadurch gekennzeichnet, daß die Partikel-Größe im Bereich von 0,5 bis 10 Micrometer liegt.

7. Membran nach einem der vorhergehenden Ansprüche, dadurch gekennzeichnet, daß die Membran-Dicke im Bereich von 1 bis 200 Micrometer liegt.

8. Membran nach Anspruch 7, dadurch gekennzeichnet, daß die Dicke im Bereich von 5 bis 20 Micrometer liegt.

9. Membran nach einem der vorhergehenden Ansprüche, dadurch gekennzeichnet, daß die Polymer-Matrix aus Silikon-Kautschuk, vorzugsweise aus einem Polysiloxan, hergestellt ist.

10. Membran nach Anspruch 9, dadurch gekennzeichnet, daß das Polysiloxan Polydimethylsiloxan ist.

11. Verwendung der Membran nach einem der Ansprüche 1 bis 10 in einem Membran-Pervaporations-Verfahren für die Abtrennung von kleinen organischen Molekülen aus diese enthaltenden wässrigen Lösungen.

12. Verwendung nach Anspruch 11, dadurch gekennzeichnet, daß die organischen Moleküle in Wasser gelöste Alkohole sind.

13. Verwendung nach Anspruch 12, dadurch gekennzeichnet, daß es sich bei den Alkoholen um Methanol, Ethanol, Propanol, Isopropanol oder Butanol handelt.

14. Verwendung nach Anspruch 13, dadurch gekennzeichnet, daß die Konzentration der Alkohole im Bereich von 0,5 bis 20 Gewichts-Prozent liegt.

15. Verwendung nach Anspruch 14, dadurch gekennzeichnet, daß die Konzentration im Bereich von 2 bis 6 Gewichts-Prozent liegt.